(19) Europäisches Patentamt / European Patent Office / Office européen des brevets

(11) **EP 4 195 323 B1**

(12) **EUROPEAN PATENT SPECIFICATION**

(45) Date of publication and mention of the grant of the patent:
**04.02.2026 Bulletin 2026/06**

(21) Application number: **22212816.7**

(22) Date of filing: **12.12.2022**

(51) International Patent Classification (IPC):
$H01M\ 4/36$ (2006.01)    $H01M\ 4/40$ (2006.01)
$H01M\ 4/46$ (2006.01)    $H01M\ 4/525$ (2010.01)
$H01M\ 10/052$ (2010.01)    $H01M\ 50/105$ (2021.01)
$H01M\ 4/02$ (2006.01)

(52) Cooperative Patent Classification (CPC):
H01M 4/525; H01M 4/366; H01M 4/40;
H01M 4/463; H01M 10/052; H01M 50/105;
H01M 2004/028; Y02E 60/10

(54) **CATHODE ACTIVE MATERIAL FOR LITHIUM SECONDARY BATTERY, METHOD OF MANUFACTURING THE SAME AND LITHIUM SECONDARY BATTERY INCLUDING THE SAME**

KATHODENAKTIVMATERIAL FÜR LITHIUMSEKUNDÄRBATTERIE, VERFAHREN ZUR HERSTELLUNG DAVON UND LITHIUMSEKUNDÄRBATTERIE DAMIT

MATÉRIAU ACTIF DE CATHODE POUR BATTERIE SECONDAIRE AU LITHIUM, SON PROCÉDÉ DE FABRICATION ET BATTERIE SECONDAIRE AU LITHIUM LE COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.12.2021 KR 20210177982**

(43) Date of publication of application:
**14.06.2023 Bulletin 2023/24**

(73) Proprietor: **SK On Co., Ltd.**
**Seoul 03161 (KR)**

(72) Inventors:
• **PARK, Sung Soon**
**34124 Daejeon (KR)**
• **CHOI, Ji Hoon**
**34124 Daejeon (KR)**
• **LEE, Ji Sun**
**34124 Daejeon (KR)**
• **LEE, Tae Kyoung**
**34124 Daejeon (KR)**
• **JANG, Dong Il**
**34124 Daejeon (KR)**

(74) Representative: **Prüfer & Partner mbB**
**Patentanwälte · Rechtsanwälte**
**Sohnckestraße 12**
**81479 München (DE)**

(56) References cited:
**CN-A- 110 620 230**    **KR-B1- 102 207 997**

• **LI YONG-CHUN ET AL: "Synergy of doping and coating induced heterogeneous structure and concentration gradient in Ni-rich cathode for enhanced electrochemical performance", JOURNAL OF POWER SOURCES, vol. 423, 31 May 2019 (2019-05-31), pages 144 - 151, XP085656124, ISSN: 0378-7753, DOI: 10.1016/ J.JPOWSOUR.2019.03.073**

**Description**

[BACKGROUND OF THE INVENTION]

1. Field of the Invention

The present invention relates to a cathode active material for a lithium secondary battery, a method of manufacturing the same, and a lithium secondary battery including the cathode active material, and more particularly, to a cathode active material including lithium metal oxide particles having a coating layer formed on surfaces thereof, a method of manufacturing the same, and a lithium secondary battery including the cathode active material.

2. Description of the Related Art

A secondary battery is a battery which can be repeatedly charged and discharged, and has been widely applied to portable electronic devices such as a mobile phone, a laptop computer, etc. as a power source thereof.

Examples of the secondary battery may include a lithium secondary battery, a nickel-cadmium battery, a nickel-hydrogen battery and the like. Among them, the lithium secondary battery has a high operating voltage and a high energy density per unit weight, and is advantageous in terms of a charging speed and light weight. In this regard, the lithium secondary battery has been actively developed and applied as a power source.

A cathode of the lithium secondary battery may include lithium metal oxide particles capable of reversibly intercalating and deintercalating lithium ions as a cathode active material.

For example, the lithium metal oxide particles may include metals such as nickel, cobalt, manganese, aluminum and the like.

As a field, to which the lithium secondary battery is applied, is expanded to large devices such as a hybrid vehicle, etc., research and development for a high nickel-based lithium metal oxide particles having an increased nickel content to secure a high capacity of lithium secondary batteries have been actively conducted.

However, the high nickel-based lithium metal oxide particles have problems in that chemical stability is deteriorated and life-span characteristics are reduced during repeated charging and discharging.

For example, Korean Patent Laid-Open No. 10-2016-0126840 discloses lithium metal oxide particles having a coating layer formed on surfaces thereof in order to solve the above-described problems.

CN 110 620 230 A relates to the field of lithium battery production, and particularly refers to a positive electrode active material and a preparation method thereof, to a positive electrode sheet, and a lithium battery.

Yong-Chun et al., "Synergy of doping and coating induced heterogeneous structure and concentration gradient in Ni-rich cathode for enhanced electrochemical performance", Journal of power sources, vol. 423, 31 May 2019, pp. 144-151 refers to Ni-rich cathodes. Herein, a coating and doping co-modified Ni-rich cathode, in which La and Al is homogeneously doped in the inner and an epitaxial layer is distributed in the outer surface region of secondary particle, is constructed.

KR 102 207 997 B1 relates to a positive electrode active material for a lithium secondary battery, a lithium secondary battery, and a method of manufacturing the same.

[SUMMARY OF THE INVENTION]

An object of the present invention is to provide a cathode active material having improved capacity and chemical stability, and a method of manufacturing the same.

Another object of the present invention is to provide a lithium secondary battery including the cathode active material having improved capacity, life-span characteristics, and high temperature stability.

The invention is set out in the appended set of claims.

Thus, to achieve the above objects, according to an aspect of the present invention, there is provided a method of manufacturing a cathode active material for a lithium secondary battery, which includes: preparing lithium metal oxide particles; putting the lithium metal oxide particles, and a first coating source containing a first metal into a coating solvent, so as to primary coat the lithium metal oxide particles; and sequentially putting a second coating source containing a second metal into the coating solvent in a state where the primary coated lithium metal oxide particles are dispersed in the coating solvent as an in-situ process without separately extracting an intermediate product, so as to secondary coat the primary coated lithium metal oxide particles, wherein the first metal is Zr or Ti, and the second metal is Al.

In one embodiment, in the primary coating step, the first coating source may be put into the coating solvent in a constant amount for a predetermined time.

In one embodiment, in the secondary coating step, the second coating source may be put into the coating solvent in a constant amount for a predetermined time.

In one embodiment, the lithium metal oxide particles may contain 80 mol% or more of nickel based on all elements except for lithium and oxygen.

In one embodiment, the coating solvent may be deionized water.

In one embodiment, the method may further include, after the secondary coating step, coating the secondary coated lithium metal oxide particles with a metalloid including at least one of B, Si, Ge, As, Te, Sb, Po and At.

In addition, according to another aspect of the present invention, there is provided a cathode active material for a lithium secondary battery, which includes: lithium metal oxide particles; and a coating layer which is formed on surfaces of the lithium metal oxide particles and contains a first metal and a second metal, wherein the coating layer comprises a first coating layer formed on surfaces of the lithium metal oxide particles; a second coating layer formed on the first coating layer; and an intermediate layer formed between the first coating layer and the second coating layer, in the intermediate layer, the first metal has a concentration change tendency of being decreased in a radial direction of the lithium metal oxide particle, and the second metal has a concentration change tendency of being increased in the radial direction of the lithium metal oxide particle, in the first coating layer, the first metal has a concentration change tendency of being increased in the radial direction of the lithium metal oxide particle, the concentration change tendency is analyzed by transmission electron microscope (TEM) and energy-dispersive X-ray spectroscopy (EDS) analysis, and the first metal is Zr or Ti, and the second metal is Al.

The cathode active material for a lithium secondary battery of the present invention includes a concentration change region having a tendency that a concentration of the first metal is decreased and a concentration of the second metal is increased in a radial direction of the lithium metal oxide particle.

In one embodiment, the coating layer may have a sea shape.

The coating layer that is present in the cathode active material of the present invention includes: a first coating layer formed on surfaces of the lithium metal oxide particles; a second coating layer formed on the first coating layer; and an intermediate layer formed between the first coating layer and the second coating layer, wherein in the intermediate layer, the first metal has a concentration change tendency of being decreased in a radial direction of the lithium metal oxide particle, and the second metal has a concentration change tendency of being increased in the radial direction of the lithium metal oxide particle, in the first coating layer, the first metal has a concentration change tendency of being increased in the radial direction of the lithium metal oxide particle, the concentration change tendency is analyzed by transmission electron microscope (TEM) and energy-dispersive X-ray spectroscopy (EDS) analysis, and the first metal is Zr or Ti, and the second metal is Al. In the second coating layer, the second metal may have a concentration change tendency of being decreased in the radial direction of the lithium metal oxide particle.

In one embodiment, the second coating layer may include: a lower coating layer formed on the intermediate layer; and an upper coating layer formed on the lower coating layer, wherein the upper coating layer may contain the second metal but may not contain the first metal.

In one embodiment, the lithium metal oxide particles may contain 80 mol% or more of nickel based on all elements except for lithium and oxygen.

In the cathode active material, the first metal is Zr or Ti, and the second metal is Al.

In one embodiment, the cathode active material may further include a metalloid coating layer including at least one of B, Si, Ge, As, Te, Sb, Po and At formed on the coating layer.

Further, according to another aspect of the present invention, there is provided a lithium secondary battery including: a cathode which includes the above cathode active material for the lithium secondary battery; and an anode disposed to face the cathode.

Further disclosed herein is a cathode active material for a lithium secondary battery fabricated by the method as described above. Further disclosed herein is a lithium secondary battery including a cathode including the cathode active material for a lithium secondary battery fabricated by the method as described above.

According to the method of manufacturing a cathode active material for a lithium secondary battery according to exemplary embodiments, it is possible to form a coating layer which contains the first metal and the second metal on the surfaces of the lithium metal oxide particles, and includes a region having a predetermined tendency that the concentrations of the first metal and the second metal are changed.

The cathode active material for a lithium secondary battery according to exemplary embodiments may include the coating layer, thereby having improved chemical stability, ionic conductivity and low resistance. In addition, the cathode active material includes the coating layer, such that, even including high nickel (80 mol% or more of Ni)-based lithium metal oxide particles, a decrease in the life-span characteristics may be prevented.

The lithium secondary battery according to the exemplary embodiments may include the above-described cathode active material, thereby having improved capacity, output characteristics, life-span characteristics and high temperature stability.

[BRIEF DESCRIPTION OF THE DRAWINGS]

The above and other objects, features and other advantages of the present invention will be more clearly understood from the following detailed description taken in conjunction with the accompanying drawings, in which:

FIG. 1 is a schematic flowchart describing a method of manufacturing a cathode active material according to an exemplary embodiment;
FIG. 2 is a cross-sectional view schematically illustrating a cathode active material particle according to an exemplary embodiment;
FIG. 3 is a cross-sectional view schematically illustrating a lithium secondary battery according to an exemplary embodiment;
FIG. 4 is a plan view schematically illustrating the lithium secondary battery according to an exemplary embodiment; and
FIG. 5 is a TEM-EDS line-scanning analysis image measured along a line from a surface portion of the lithium metal oxide particle to a coating layer in a cross section of the cathode active material particle according to the embodiment.

[DETAILED DESCRIPTION OF THE INVENTION]

As used herein, the terms "first metal and the second metal" refer to different types of metals.
Exemplary embodiments of the present invention provide a cathode active material for a lithium secondary battery, which includes: lithium metal oxide particles; and a coating layer formed on surfaces of the lithium metal oxide particles, a method of manufacturing the same, and a lithium secondary battery including the cathode active material.

**Method of manufacturing a cathode active material for a lithium secondary battery**

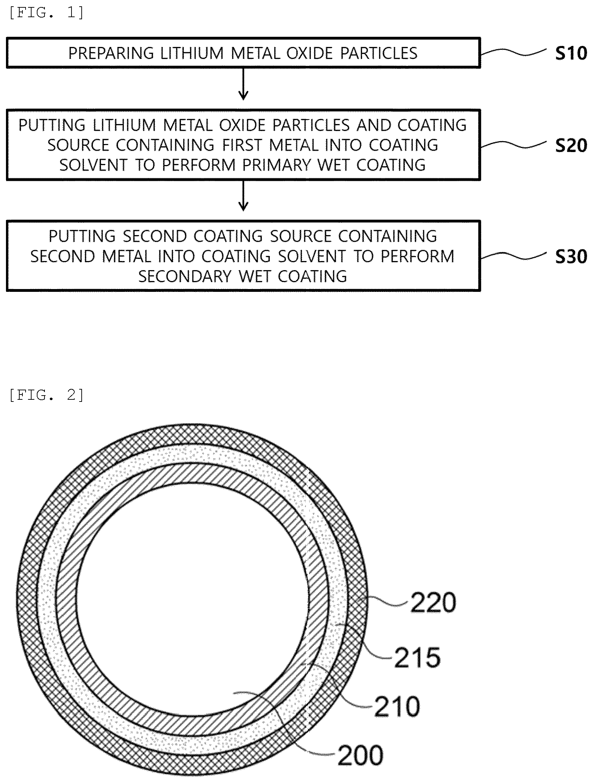

FIG. 1 is a flowchart schematically illustrating a method of manufacturing a cathode active material according to an exemplary embodiment.
Referring to FIG. 1, lithium metal oxide particles may be prepared (e.g., S10).
For example, in step S10, the lithium metal oxide particles may be prepared by fabricating metal hydroxide particles, and mixing the metal hydroxide particles with a lithium source, followed by calcining the same.
For example, in step S10, a reaction solution (e.g., aqueous solution) including a metal salt, a chelating agent and a co-precipitant may be prepared. The metal hydroxide particles may be prepared by performing a co-precipitation reaction in the reaction solution.
For example, the metal salt may include metal sulfate, metal nitrate, metal acetate, metal hydroxide, metal carbonate, a hydrate thereof and the like.
For example, the metal salt may include Ni, Co, Mn, Al, Zr, Ti, Cr, B, Mg, Mn, Ba, Si, Y, W, Sr and the like.
For example, various types of metal salts may be prepared so as to satisfy the composition, molar ratio, and the like of the metal described in Formula 1, which will be described below.
In one embodiment, the metal salt may include Ni.
In some embodiments, the metal salt may further include at least one of Co and Mn. In some embodiments, the metal salt may include Ni, Co and Mn.
For example, the co-precipitant may include sodium hydroxide, sodium carbonate and the like. For example, the chelating agent may include ammonia water (e.g., $NH_3H_2O$), ammonium carbonate and the like.
For example, the temperature of the co-precipitation reaction may be appropriately controlled as known in the art without particular limitation thereof.
For example, the lithium source may include lithium hydroxide, lithium carbonate, lithium nitrate, lithium acetate, lithium oxide and the like.
In one embodiment, the lithium metal oxide particles may contain Ni.
In some embodiments, the lithium metal oxide particles may further contain Co, Mn and the like. In some embodiments, the lithium metal oxide particles may contain Ni, Co and Mn.
In one embodiment, the lithium metal oxide particles may contain Ni in an amount of 80 mol% or more based on all elements except for lithium and oxygen.
In some embodiments, the lithium metal oxide particles contain Ni in an amount of 85 mol% or more, 88 mol% or more, 90 mol% or more, 93 mol% or more, or 95 mol% or more based on all elements except for lithium and oxygen. For example, when the lithium metal oxide particles contain nickel in a high concentration, the capacity of the lithium secondary battery may be improved, but life-span characteristics and high temperature stability may be reduced. However, the cathode active material according to exemplary embodiments of the present invention may include a coating layer to be described below, thereby preventing a decrease in the life-span characteristics.

In one embodiment, the lithium metal oxide particles may be represented by Formula 1 below.

$$[\text{Formula 1}] \qquad Li_xNi_aCo_bM_cO_y$$

In Formula 1, M may be at least one of Al, Zr, Ti, B, Mg, Mn, Ba, Si, Y, W and Sr, and x, y, a, b, and c may be a range of $0.9 \leq x \leq 1.2$, $1.9 \leq y \leq 2.1$, $0.8 \leq a \leq 1$, $0 \leq (b+c)/a \leq 0.25$, $0 < a+b+c \leq 1$, $0 \leq b \leq 0.2$, and $0 \leq c \leq 0.2$, respectively.

In some embodiments, a may be a range of $0.85 \leq a < 1$, $0.88 \leq a < 1$, $0.9 \leq a < 1$, $0.93 \leq a < 1$, or $0.95 \leq a < 1$.

In some embodiments, step S10 may include doping the lithium metal oxide particles with a doping element. For example, the doping element may be at least one of Al, Ti, Zr, B, Ba, Si, Mg, P, Sr, W and La.

Referring to FIG. 1, a coating source containing the lithium metal oxide particles and a first metal is put into a coating solvent and mixed, so as to perform primary wet coating (e.g., S20).

In one embodiment, the coating solvent may be deionized water.

In step S20, a first coating layer containing the first metal may be formed on surfaces of the lithium metal oxide particles.

For example, the first coating layer may have a sea shape. For example, the sea shape is a continuous phase, and may be distinguished from an island shape which is a discontinuous phase.

In one embodiment, the first coating layer may cover an area of 70% or more, 80% or more, or 90% or more of the surfaces of the lithium metal oxide particles.

In one embodiment, the first coating layer may cover substantially entire surfaces of the lithium metal oxide particles (e.g., in EDS analysis, a peak of the first metal is observed in the entire surface area).

In one embodiment, in step S20, the first coating source may be put into the coating solvent in a constant amount for a predetermined time. That is, the first coating source may be put into the coating solvent at a constant rate. For example, a putting time and a putting amount of the first coating source may be controlled according to the desired thickness of the coating layer. Thereby, a uniform coating layer without defects may be formed.

Referring to FIG. 1, a second coating source containing a second metal may be additionally put into the coating solvent, so as to perform secondary wet coating (e.g., S30)
Steps S20 and S30 may be performed as an in-situ process. The in-situ process may mean a process of sequentially performing a series of reactions (e.g., primary coating and secondary coating) without separately extracting an intermediate product (e.g., lithium metal oxide particles on which the first coating layer is formed). For example, the in-situ process may be performed in the same reactor.

For example, in a state where the lithium metal oxide particles on which the first coating layer is formed are dispersed in the coating solvent (that is, without separately filtering or drying the lithium metal oxide particles on which the first coating layer is formed), the second coating source containing the second metal may be put into the coating solvent.

In one embodiment, in step S30, the second coating source may be put into the coating solvent in a constant amount for a predetermined time. That is, the second coating source may be put into the coating solvent at a constant rate. For example, the putting time and the putting amount of the second coating source may be controlled according to the desired thickness of the coating layer. Thereby, a uniform coating layer without defects may be formed.

In one embodiment, the putting time of the first coating source and the putting time of the second coating source may be separated from each other, or may be partially overlapped with each other.

By step S30, a second coating layer containing the second metal may be formed on the first coating layer.

In addition, by step S30, an intermediate layer may be formed between the first coating layer and the second coating layer, which has a predetermined tendency that concentrations of the first metal and the second metal are changed. For example, in the intermediate layer, the first metal has a concentration change tendency of being decreased in a radial direction of the lithium metal oxide particle (i.e., in a direction from a center to the surface of the particle), and the second metal has a concentration change tendency of being increased in the radial direction of the lithium metal oxide particle.

For example, the second coating layer and the intermediate layer may have a sea shape, respectively.

The cathode active material according to the exemplary embodiments may include a first coating layer, a second coating layer, and an intermediate layer (hereinafter, abbreviated as coating layers), thereby having improved ionic conductivity and low resistance, and preventing a side reaction with an electrolyte. In addition, even when including high-Ni (80 mol% or more of Ni)-based lithium metal oxide particles, a decrease in the life-span characteristics may be prevented by the above-described coating layers. Thereby, the lithium secondary battery including the cathode active material may have improved capacity, output characteristics, life-span characteristics and high temperature stability.

Meanwhile, when simultaneously putting multiple types of coating sources to (dry or wet) coat the metals, the coating layer cannot be formed, and a coating layer in which multiple types of metals are uniformly dispersed is formed.

In addition, even when the primary coating and the secondary coating are performed as separate processes, the coating layer (e.g., the intermediate layer) cannot be formed.

In addition, when performing dry coating, an island-shaped coating layer is formed, such that it is difficult to effectively passivate the lithium metal oxide particles. Further, if performing wet coating multiple times as separate processes, lithium in the lithium metal oxide particles may be lost, or crystal structures of the lithium metal oxide particles may be excessively changed, thereby the life-span characteristics and high temperature stability of the lithium secondary battery may be deteriorated.

In the present invention, the first metal is Zr or Ti, and the second metal is Al.

In one embodiment, the first coating source may be a coating source solution in which the first metal is dissolved in a solvent in the form of a salt. Similarly, the second coating source may be a coating source solution in which the second metal is dissolved in a solvent in the form of a salt. For example, the solvent may be deionized water.

In one embodiment, after step S30, the method may further include coating the lithium metal oxide particles on which the coating layer is formed with a coating source containing a metalloid. For example, the metalloid coating step may be performed by a dry coating method, a wet coating method or the like.

In some embodiments, the metalloid coating step may be wet coating, and the metalloid coating step may also be performed by the above-described in-situ process.

In some embodiments, the metalloid may include at least one of B, Si, Ge, As, Te, Sb, Po and At.

## Cathode active material for a lithium secondary battery

The cathode active material for a lithium secondary battery of the present invention is as defined in the appended set of claims.

Referring to FIG. 2, a cathode active material for a lithium secondary battery according to exemplary embodiments may include: lithium metal oxide particles 200; and coating layers 210, 215 and 220 which are formed on surfaces of the lithium metal oxide particles 200 and contain a first metal and a second metal, respectively.

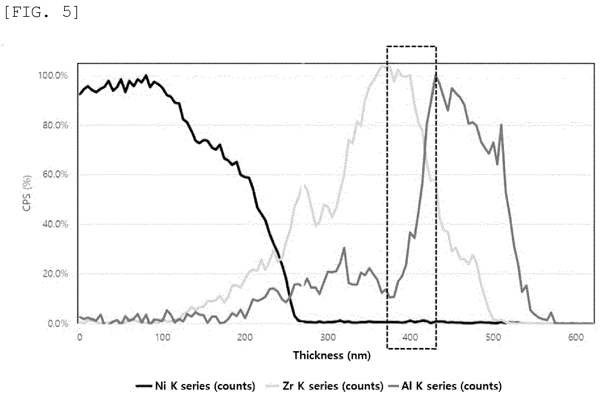

The coating layer may include a concentration change region (e.g., the dotted line region in FIG. 5) having a tendency that the concentration of the first metal is decreased and the concentration of the second metal is increased on the basis of the radial direction of the lithium metal oxide particle 200 (i.e., in the direction from the center to the surface of the particle).

In one embodiment of the present invention, the coating layer includes: a first coating layer 210 formed on the surfaces of the lithium metal oxide particles 200; a second coating layer 220 formed on the first coating layer 210; and an intermediate layer 215 formed between the first coating layer 210 and the second coating layer 220.

In one embodiment of the present invention, the intermediate layer 215 includes the concentration change region. In the intermediate layer 215, the first metal has a concentration change tendency of being decreased in the radial direction of the lithium metal oxide particle 200, and the second metal has a concentration change tendency of being increased in the radial direction thereof.

In a predetermined region, "whether it has a tendency that the concentration is decreased (or increased)" or "whether it has a concentration change tendency of being decreased (or increased)" is determined by judging the corresponding region as a whole. In addition, even if a part of the predetermined region have a value opposite to the overall tendency, the overall tendency may be maintained unless it is not a degree such that the overall tendency is changed.

The cathode active material according to exemplary embodiments may include the coating layers 210, 215, and 220, thereby having improved ion conductivity and low resistance, and suppressing a side reaction with the electrolyte. In addition, even when including the high-Ni (80 mol% or more of Ni)-based lithium metal oxide particles, a decrease in the life-span characteristics may be prevented by the above-described coating layers. Thereby, the lithium secondary battery including the cathode active material may have the improved capacity, output characteristics, life-span characteristics and high temperature stability.

In one embodiment, the first coating layer 210 contains the first metal and the second metal, and in the first coating layer 210, the first metal has a concentration change tendency of being increased in the radial direction of the lithium metal oxide particle 200.

In one embodiment, the second coating layer 220 may contain the first metal and the second metal, and in the second coating layer 220, the second metal has a concentration change tendency of being decreased in the radial direction of the lithium metal oxide particle 200.

In some embodiments, the second coating layer 220 may include: a lower coating layer (not shown) which is formed on the intermediate layer 215, and contains the first metal and the second metal; and an upper coating layer (not shown) which is formed on the lower coating layer, and contains the second metal but does not contain the first metal. For example, by setting the second metal as a metal having excellent passivation performance, the stability of the cathode active material may be further improved.

In one embodiment, the coating layers 210, 215 and 220 may have a sea shape not the island shape.

In one embodiment, the first coating layer 210 may cover an area of 70% or more, 80% or more, or 90% or more of the surfaces of the lithium metal oxide particles 200, or cover substantially the entire surface. The intermediate layer 215 may cover an area of 70% or more, 80% or more, or 90% or more of the surface of the first coating layer 210, or cover substantially the entire surface. The second coating layer 220 may cover an area of 70% or more, 80% or more, or 90% or more of the surface of the intermediate layer 215, or cover substantially the entire surface. Within the above range, the cathode active material may have further improved chemical stability.

For example, the lithium metal oxide particles 200 may have a monolith form, or may have a form of secondary particles in which a plurality of primary particles are aggregated.

In one embodiment, the lithium metal oxide particles 200 may contain Ni.

In some embodiments, the lithium metal oxide particles 200 may further contain Co, Mn or the like. In some embodiments, lithium metal oxide particles 200 may contain Ni, Co and Mn.

In one embodiment, the lithium metal oxide particles 200 may contain Ni in an amount of 80 mol% or more based on all elements except for lithium and oxygen.

In some embodiments, the lithium metal oxide particles 200 may contain Ni at 85 mol% or more, 88 mol% or more, 90 mol% or more, 93 mol% or more, or 95 mol% or more based on all elements except for lithium and oxygen.

In one embodiment, the lithium metal oxide particles 200 may be represented by Formula 1 below.

$$[\text{Formula 1}] \qquad Li_xNi_aCo_bM_cO_y$$

In Formula 1, M may be at least one of Al, Zr, Ti, B, Mg, Mn, Ba, Si, Y, W and Sr, and x, y, a, b, and c may be a range of $0.9{\leq}x{\leq}1.2$, $1.9{\leq}y{\leq}2.1$, $0.8{\leq}a{\leq}1$, $0{\leq}(b+c)/a{\leq}0.25$, $0<a+b+c{\leq}1$, $0{\leq}b{\leq}0.2$, and $0{\leq}c{\leq}0.2$, respectively.

In some embodiments, a may be $0.85{\leq}a<1$, $0.88{\leq}a<1$, $0.9{\leq}a<1$, $0.93{\leq}a<1$, or $0.95{\leq}a<1$.

In some embodiments, the lithium metal oxide particles 200 may contain a doping element. For example, the doping metal may be at least one of Al, Ti, Zr, B, Ba, Si, Mg, P, Sr, W and La.

In the cathode active material for a lithium secondary battery of the present invention, the first metal is Zr or Ti, and the second metal is Al.

The cathode active material according to some embodiments may further include a coating layer (not shown) which is formed on the second coating layer 220, and contains a metalloid. For example, the metalloid may include at least one of B, Si, Ge, As, Te, Sb, Po and At.

## Lithium secondary battery

The lithium secondary battery of the present invention is as defined in the appended set of claims.

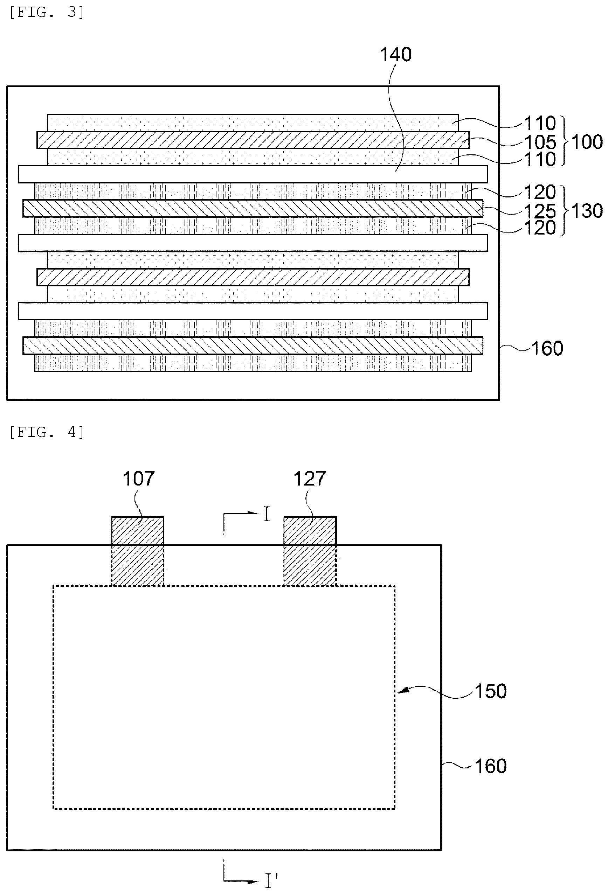

FIGS. 3 and 4 are a schematic cross-sectional view and a plan view of a lithium secondary battery according to exemplary embodiments, respectively. FIG. 3 is a cross-sectional view taken on line I-I' in FIG. 4.

Referring to FIGS. 3 and 4, the lithium secondary battery may include a cathode 100 and an anode 130 disposed to face the cathode 100.

The cathode 100 may include a cathode current collector 105 and a cathode active material layer 110 on the cathode current collector 105.

The cathode active material layer 110 may include the cathode active material for a lithium secondary battery according to exemplary embodiments, and if necessary, a cathode binder, a conductive material and the like.

For example, the cathode 100 may be prepared by mixing and stirring the cathode active material, the cathode binder, and the conductive material, etc. in the solvent to prepare a cathode slurry, and then coating the cathode current collector 105 with the cathode slurry, followed by drying and rolling the same.

For example, the cathode current collector 105 may include stainless steel, nickel, aluminum, titanium, copper or an alloy thereof.

For example, the cathode binder may include an organic binder such as polyvinylidene fluoride (PVDF), vinylidene fluoride-hexafluoropropylene copolymer (PVDF-co-HFP), polyacrylonitrile, polymethyl methacrylate, etc., or an aqueous binder such as styrene-butadiene rubber (SBR). In addition, for example, the cathode binder may be used together with a thickener such as carboxymethyl cellulose (CMC).

For example, the conductive material may include a carbon-based conductive material such as graphite, carbon black, graphene, and carbon nanotubes; or a metal-based conductive material including tin, tin oxide, titanium oxide, or a perovskite material such as LaSrCoO3, and LaSrMnO3.

The anode 130 may include an anode current collector 125 and an anode active material layer 120 on the anode current collector 125.

For example, the anode active material layer 120 may include an anode active material, and if necessary, an anode binder and a conductive material.

For example, the anode 130 may be prepared by dispersing the anode active material, and if necessary, the anode binder and an anode conductive material in a solvent to prepare an anode slurry, and then coating the anode current collector 125 with the anode slurry, followed by drying and rolling the same.

For example, the anode current collector 125 may include gold, stainless steel, nickel, aluminum, titanium, copper or an alloy thereof.

For example, the anode active material may be a material capable of intercalating and deintercalating lithium ions. For example, the anode active material may include a lithium alloy, a carbon-based active material, a silicon-based active material, and the like, and these may be used alone or in combination of two or more thereof.

For example, the lithium alloy may include aluminum, zinc, bismuth, cadmium, antimony, silicon, lead, tin, gallium, indium and the like.

For example, the carbon-based active material may include crystalline carbon, amorphous carbon, carbon composite, carbon fiber and the like.

For example, the amorphous carbon may include hard carbon, cokes, mesocarbon microbeads, mesophase pitch-based carbon fiber and the like.

For example, the crystalline carbon may include natural graphite, artificial graphite, graphite cokes, graphite MCMB, graphite MPCF and the like.

In one embodiment, the anode active material may include a silicon-based active material. For example, the silicon-based active material may include Si, $SiO_x(0<x<2)$, Si/C, SiO/C, Si-Metal and the like. In this case, a lithium secondary battery having a high capacity may be implemented.

The anode binder and the anode conductive material may be substantially the same as or similar to the above-described cathode binder and the conductive material. For example, the anode binder may include an aqueous binder such as styrene-butadiene rubber (SBR). In addition, the anode binder may be used together with a thickener such as carboxymethyl cellulose (CMC).

For example, a separation membrane 140 may be interposed between the cathode 100 and the anode 130.

In some embodiments, the anode 130 may have an area larger than that of the cathode 100. In this case, lithium ions generated from the cathode 100 may smoothly move to the anode 130 without being precipitated in the middle.

For example, the separation membrane 140 may include a porous polymer film made of a polyolefin polymer such as ethylene homopolymer, propylene homopolymer, ethylene/butene copolymer, ethylene/hexene copolymer, ethylene/methacrylate copolymer. In addition, for example, the separation membrane 140 may include a nonwoven fabric made of glass fiber having a high melting point, polyethylene terephthalate fiber or the like.

For example, an electrode cell may be formed by including the cathode 100, the anode 130 and the separation membrane 140.

For example, a plurality of electrode cells may be laminated to form the electrode assembly 150. For example, the electrode assembly 150 may be formed by winding, lamination, z-folding, etc. the separation membrane 140.

A lithium secondary battery according to exemplary embodiments may include: a cathode lead 107 connected to the cathode 100 and protruding to an outside of a case 160; and an anode lead 127 connected to the anode 130 and protruding to the outside of the case 160.

For example, the cathode 100 and the cathode lead 107 may be electrically connected with each other. Similarly, the anode 130 and the anode lead 127 may be electrically connected with each other.

For example, the cathode lead 107 may be electrically connected to the cathode current collector 105. In addition, the anode lead 127 may be electrically connected to the anode current collector 125.

For example, the cathode current collector 105 may include a cathode tab (not shown) protruding from one side. The cathode active material layer 110 may not be formed on the cathode tab. The cathode tab may be formed integrally with the cathode current collector 105 or may be connected thereto by welding or the like. The cathode current collector 105 and the cathode lead 107 may be electrically connected with each other through the cathode tab.

For example, the anode current collector 125 may include an anode tab (not shown) protruding from one side. The anode active material layer 120 may not be formed on the anode tab. The anode tab may be formed integrally with the anode current collector 125 or may be connected thereto by welding or the like. The anode current collector 125 and the anode lead 127 may be electrically connected with each other through the anode tab.

For example, the electrode assembly 150 may include a plurality of cathodes and a plurality of anodes. For example, the plurality of cathodes may include the cathode tab, respectively. For example, the plurality of anodes may include the anode tab, respectively.

In one embodiment, the cathode tabs (or, the anode tabs) may be laminated, compressed, and welded to form a cathode tab laminate (or, an anode tab laminate). The cathode tab laminate may be electrically connected to the cathode lead 107. In addition, the anode tab laminate may be electrically connected to the anode lead 127.

For example, the electrode assembly 150 may be housed in the case 160 together with the electrolyte to form a lithium secondary battery.

The lithium secondary battery may be manufactured, for example, in a cylindrical shape, a square shape, a pouch type or a coin shape.

The electrode assembly 150 may be housed in the case 160 together with the electrolyte to form the lithium secondary battery.

For example, the electrolyte may include a lithium salt, an organic solvent, and if necessary, an additive.

For example, the lithium salt may be represented by $Li^{+}X^{-}$

For example, $X^{-}$ may be any one of $F^{-}$, $Cl^{-}$, $Br^{-}$, $I^{-}$, $NO_3^{-}$, $N(CN)_2^{-}$, $BF_4^{-}$, $ClO_4^{-}$, $PF_6^{-}$, $(CF_3)_2PF_4^{-}$, $(CF_3)_3PF_3^{-}$, $(CF_3)_4PF_2^{-}$, $(CF_3)_5PF^{-}$, $(CF_3)_6P^{-}$, $CF_3SO_3^{-}$, $CF_3CF_2SO_3^{-}$, $(CF_3SO_2)_2N^{-}$, $(FSO_2)_2N^{-}$, $CF_3CF_2(CF_3)_2CO^{-}$, $(CF_3SO_2)_2CH^{-}$, $(SF_5)_3C^{-}$, $(CF_3SO_2)_3C^{-}$, $CF_3(CF_2)_7SO_3^{-}$, $CF_3CO_2^{-}$, $CH_3CO_2^{-}$, $SCN^{-}$ and $(CF_3CF_2SO_2)_2N^{-}$

For example, the lithium salt may include $LiBF_4$, $LiPF_6$ and the like.

For example, the organic solvent may include ethylene carbonate (EC), propylene carbonate (PC), dimethyl carbonate (DMC), diethyl carbonate (DEC), ethylmethyl carbonate (EMC), methylpropyl carbonate, dipropyl carbonate, dimethyl sulfoxide, acetonitrile, dimethoxyethane, diethoxyethane, vinylene carbonate, sulforane, $\gamma$-butyrolactone, propylene sulfite, tetrahydrofurane and the like.

Hereinafter, preferred examples and comparative examples of the present invention will be described. However, the following examples are only preferred examples of the present invention, and the present invention is not limited thereto.

**[Example]**

**1. Preparation of cathode active material particles**

Lithium metal oxide particles (NCM 811; $LiNi_{0.8}Co_{0.1}Mn_{0.1}O_2$) and deionized water were put into a reactor.

$Zr(SO_4)_2$ (1,500 ppm of Zr based on the weight of lithium metal oxide particles) dissolved in deionized water was constantly put into the reactor for 10 minutes, then primary wet coating was performed.

$Al_2(SO_4)_3$ (1,000 ppm of Al based on the weight of lithium metal oxide particles) dissolved in deionized water was constantly put into the reactor for 10 minutes to perform secondary wet coating. After the primary wet coating was performed, the second wet coating was performed without separate filtering and drying processes.

After the second wet coating, the particles were filtered and dried at 150°C for 12 hours. After drying, the particles were put into a calcination furnace under an oxygen (O2) atmosphere, then calcination was performed at 400°C for 10 hours.

After the calcination, the particles were cooled to room temperature, followed by grinding and classification to prepare cathode active material particles of the example.

**2. Preparation of lithium secondary battery**

A cathode slurry was prepared by dispersing the cathode active material particles of the example, carbon black and polyvinylidene fluoride in N-methyl-2-pyrrolidone in a weight ratio of 92:5:3.

The cathode slurry was uniformly applied to a region of an aluminum foil (thickness: 15 $\mu$m) having a protrusion part (cathode tab) on one side except for the protrusion part, followed by drying and rolling to prepare a cathode.

An anode slurry was prepared by dispersing an anode active material in which artificial graphite and natural graphite were mixed in a weight ratio of 7:3, styrene-butadiene rubber (SBR) and carboxymethyl cellulose (CMC) in water in a weight ratio of 97:1:2.

The anode slurry was uniformly applied to a region of an aluminum foil (thickness: 15 $\mu$m) having a protrusion part (anode tab) on one side except for the protrusion part, followed by drying and rolling to prepare an anode.

An electrode assembly was formed by interposing a polyethylene separation membrane (thickness: 20 $\mu$m) between the cathode and the anode. Next, a cathode lead and an anode lead were welded and connected to the cathode tab and the anode tab, respectively.

An electrolyte was prepared by preparing 1 M $LiPF_6$ solution (30:70 v/v EC/EMC mixed solvent), then adding the following components thereto, so as to be 1% by weight ('wt.%') of fluoroethylene carbonate (FEC), 0.3 wt.% of vinylethylene carbonate (VC), 1 wt.% of lithium difluorophosphate ($LiPO_2F_2$), 0.5 wt.% of 1,3-propane sultone (PS), and 0.5 wt.% of prop-1-ene-1,3-sultone (PRS) based on the total weight of the electrolyte.

The electrode assembly was housed in a pouch (case) so that some regions of the cathode lead and the anode lead were exposed to an outside of the pouch, followed by sealing three sides of the pouch except for a side of an electrolyte injection part.

The electrolyte was injected into the pouch, followed by sealing the side of an electrolyte injection part to prepare a lithium secondary battery.

**[Comparative Example 1]**

Lithium metal oxide particles (NCM 811; $LiNi_{0.8}Co_{0.1}Mn_{0.1}O_2$) were put into deionized water in a weight ratio of 1:1 and washed for 20 minutes.

After washing, the particles were filtered, dried at 150°C for 12 hours, and put into a calcination furnace under an oxygen atmosphere, then calcination was performed at 400°C for 10 hours.

After the calcination, the particles were cooled to room temperature, followed by grinding and classification to prepare cathode active material particles of Comparative Example 1.

A lithium secondary battery was prepared in the same manner as in the example, except that the cathode active material particles of Comparative Example 1 were used.

**[Comparative Example 2]**

Lithium metal oxide particles (NCM 811; $LiNi_{0.8}Co_{0.1}Mn_{0.1}O_2$) were put into deionized water in a weight ratio of 1:1 and washed for 20 minutes.

After washing, the particles were filtered and dried at 150°C for 12 hours.

The lithium metal oxide particles on which the washing was completed, $ZrO_2$ (having a particle diameter of about 100 nm, and including 1,500 ppm of Zr based on the weight of the lithium metal oxide particles) and $Al_2O_3$ (having a particle diameter of 30 to 70 nm, and including 1,000 ppm of Al based on the weight of the lithium metal oxide particles) were mixed in a dry high-speed mixer, and uniformly mixed for 1 minute to prepare a mixture.

The mixture was put into a calcination furnace under an oxygen atmosphere, then calcination was performed at 400°C for 10 hours.

After the calcination, the particles were cooled to room temperature, followed by grinding and classification to prepare cathode active material particles of Comparative Example 2.

A lithium secondary battery was prepared in the same manner as in the example, except that the cathode active material particles of Comparative Example 2 were used.

**[Comparative Example 3]**

Lithium metal oxide particles (NCM 811; $LiNi_{0.8}Co_{0.1}Mn_{0.1}O_2$) and deionized water were put into a reactor.

$Zr(SO_4)_2$ dissolved in deionized water (including 1,500 ppm of Zr based on the weight of the lithium metal oxide particles) and $Al_2(SO_4)_3$ dissolved in deionized water (including 1,000 ppm of Al based on the weight of the lithium metal oxide particles) were simultaneously put into the reactor, then wet coating was performed.

After wet coating, the particles were filtered, dried at 150°C for 12 hours, and put into a calcination furnace under an oxygen ($O_2$) atmosphere, then calcination was performed at 400°C for 10 hours.

After the calcination, the particles were cooled to room temperature, followed by grinding and classification to prepare cathode active material particles of Comparative Example 3.

A lithium secondary battery was prepared in the same manner as in the example, except that the cathode active material particles of Comparative Example 3 were used.

**[Comparative Example 4]**

Lithium metal oxide particles (NCM 811; $LiNi_{0.8}Co_{0.1}Mn_{0.1}O_2$) and deionized water were put into a reactor.

$Zr(SO_4)_2$ (1,500 ppm of Zr based on the weight of lithium metal oxide particles) dissolved in deionized water was constantly put into the reactor for 10 minutes, then wet coating was performed. After wet coating, the particles were dried at 150°C for 12 hours.

The wet-coated lithium metal oxide particles and $Al_2O_3$ (having a particle diameter of 30 to 70 nm, and including 1,000 ppm of Al based on the weight of the lithium metal oxide particles) were put into a dry high-speed mixer and uniformly mixed for 1 minute to prepare a mixture.

The mixture was put into a calcination furnace under an oxygen atmosphere, then calcination was performed at 400°C for 10 hours.

After the calcination, the particles were cooled to room temperature, followed by grinding and classification to prepare cathode active material particles of Comparative Example 4.

A lithium secondary battery was prepared in the same manner as in the example, except that the cathode active material particles of Comparative Example 4 were used.

**Experimental Example** 1: **TEM-EDS (morphology and component analysis of coating layer)**

The cathode active material particles of the example were analyzed by a transmission electron microscope (TEM) and energy-dispersive X-ray spectroscopy (EDS). Tecnai G2 F30 was used for TEM, and Oxford Ultim Max TLE was used for EDS.

On the cross section of the cathode active material particles of the example, TEM-EDS line-scanning analysis (spot size of 5 nm) was performed in a radial direction of the particle (a direction from a center to a surface of the particle).

# EP 4 195 323 B1

TEM-EDS line-scanning analysis image is illustrated in FIG. 5.

Referring to FIG. 5, it can be seen that there is a region (the dotted line region in FIG. 5) having a concentration change tendency that a concentration of Zr is decreased and a concentration of Al is increased in the radial direction of the particle.

## Experimental Example 2: Evaluation of room temperature performance

### (1) Evaluation of initial capacity

0.1 C-rate CC/CV charging (4.3 V, 0.05 C CUT-OFF), and 0.1 C-rate CC discharging (3.0 V CUT-OFF) were performed on the lithium secondary batteries of the example and comparative examples at 25 °C, then a discharge capacity C1 at one time was measured.

### (2) Evaluation of room temperature life-span (capacity retention rate)

Charging and discharging were repeatedly performed 100 times on the lithium secondary batteries of the example and comparative examples at 25°C, then a discharge capacity C2 at the 100th was measured.

The room temperature capacity retention rate was calculated according to the equation below.

Room temperature capacity retention rate (%) = C2/C1 $\times$ 100

## Experimental Example 3: Evaluation of high temperature performance (high temperature capacity retention rate)

CC/CV charging (0.33 C 4.3 V 0.05 C CUT-OFF) and CC discharging (0.33 C 3.0 V CUT-OFF) were repeatedly performed 100 times on the lithium secondary batteries of the example and comparative examples at high temperature (45°C), then a discharge capacity C3 at the 100th was measured.

The high temperature capacity retention rate was calculated according to the equation below.

High temperature capacity retention rate (%) = C3/C1 $\times$ 100

[TABLE 1]

|  | Initial discharge capacity (mah/g) | Efficiency (%) | Room temperature capacity retention rate (%) | High temperature capacity retention rate (%) |
|---|---|---|---|---|
| Example | 216.3 | 94.6 | 82.1 | 79.3 |
| Comparative Example 1 | 213.4 | 92.1 | 60.3 | 51.7 |
| Comparative Example 2 | 214.2 | 93.2 | 69.3 | 67.4 |
| Comparative Example 3 | 215.1 | 93.5 | 78.1 | 76.5 |
| Comparative Example 4 | 214.5 | 92.9 | 73.8 | 70.5 |

Referring to Table 1, the lithium secondary battery of the example exhibited improved efficiency, room temperature capacity retention rate, and high temperature capacity retention rate compared to lithium secondary batteries of the comparative examples.

## Claims

1.    A method of manufacturing a cathode active material for a lithium secondary battery, the method comprising:

preparing lithium metal oxide particles (200);
putting the lithium metal oxide particles (200), and a first coating source containing a first metal into a coating solvent, so as to primary coat the lithium metal oxide particles (200); and

11

sequentially putting a second coating source containing a second metal into the coating solvent in a state where the primary coated lithium metal oxide particles (200) are dispersed in the coating solvent as an in-situ process without separately extracting an intermediate product, so as to secondary coat the primary coated lithium metal oxide particles (200);

wherein the first metal is Zr or Ti, and the second metal is Al.

2. The method according to claim 1, wherein the lithium metal oxide particles (200) contain 80 mol% or more of nickel based on all elements except for lithium and oxygen.

3. The method according to claim 1 or claim 2, wherein the coating solvent is deionized water.

4. A cathode active material for a lithium secondary battery comprising:

lithium metal oxide particles (200); and
a coating layer which is formed on surfaces of the lithium metal oxide particles (200) and contains a first metal and a second metal,
wherein the coating layer comprises:

a first coating layer (210) formed on surfaces of the lithium metal oxide particles (200); a second coating layer (220) formed on the first coating layer (210); and an intermediate layer (215) formed between the first coating layer (210) and the second coating layer (220),
in the intermediate layer (215), the first metal has a concentration change tendency of being decreased in a radial direction of the lithium metal oxide particle (200), and the second metal has a concentration change tendency of being increased in the radial direction of the lithium metal oxide particle (200),
in the first coating layer (210), the first metal has a concentration change tendency of being increased in the radial direction of the lithium metal oxide particle (200),
the concentration change tendency is analyzed by transmission electron microscope (TEM) and energy-dispersive X-ray spectroscopy (EDS) analysis, and

the first metal is Zr or Ti, and the second metal is Al.

5. The cathode active material for a lithium secondary battery according to claim 4, the first coating layer (210) covers an area of 70 % or more of the surfaces of the lithium metal oxide particles (200).

6. The cathode active material for a lithium secondary battery according to claim 4 or claim 5, wherein
in the second coating layer (220), the second metal has a concentration change tendency of being decreased in the radial direction of the lithium metal oxide particle (200), and
the concentration change tendency is analyzed by transmission electron microscope (TEM) and energy-dispersive X-ray spectroscopy (EDS) analysis.

7. The cathode active material for a lithium secondary battery according to anyone of claims 4 to 6, wherein the second coating layer (220) comprises:

a lower coating layer formed on the intermediate layer (215); and an upper coating layer formed on the lower coating layer,
wherein the upper coating layer contains the second metal but does not contain the first metal.

8. The cathode active material for a lithium secondary battery according to one of claims 4 to 7, wherein the lithium metal oxide particles (200) contain 80 mol% or more of nickel based on all elements except for lithium and oxygen.

9. A lithium secondary battery, comprising:
a cathode (100) comprising a cathode active material layer (110) that comprises the cathode active material for a lithium secondary battery according to one of claims 4 to 8; and an anode (130) facing the cathode.

**Patentansprüche**

1. Verfahren zur Herstellung eines Kathodenaktivmaterials für eine Lithium-Sekundärbatterie, wobei das Verfahren umfasst:

Herstellen von Lithiummetalloxidpartikeln (200);

Einbringen der Lithiummetalloxidpartikel (200) und einer ersten Beschichtungsquelle, enthaltend ein erstes Metall, in ein Beschichtungslösungsmittel, um die Lithiummetalloxidpartikel (200) primär zu beschichten; und sequenzielles Einbringen einer zweiten Beschichtungsquelle, enthaltend ein zweites Metall, in das Beschichtungslösungsmittel in einem Zustand, in dem die primär beschichteten Lithiummetalloxidpartikel (200) in dem Beschichtungslösungsmittel dispergiert sind, als ein In-situ-Prozess, ohne ein Zwischenprodukt separat zu extrahieren, um die primär beschichteten Lithiummetalloxidpartikel (200) sekundär zu beschichten;

wobei das erste Metall Zr oder Ti ist und das zweite Metall Al ist.

2. Verfahren gemäß Anspruch 1, wobei die Lithiummetalloxidpartikel (200) 80 Mol-% oder mehr Nickel, bezogen auf alle Elemente außer Lithium und Sauerstoff, enthalten.

3. Verfahren gemäß Anspruch 1 oder Anspruch 2, wobei das Beschichtungslösungsmittel entionisiertes Wasser ist.

4. Kathodenaktivmaterial für eine Lithium-Sekundärbatterie, umfassend:

Lithiummetalloxidpartikel (200); und

eine Beschichtungsschicht, welche auf Oberflächen der Lithiummetalloxidpartikel (200) gebildet ist und ein erstes Metall und ein zweites Metall enthält,

wobei die Beschichtungsschicht umfasst:

eine erste Beschichtungsschicht (210), welche auf Oberflächen der Lithiummetalloxidpartikel (200) gebildet ist;

eine zweite Beschichtungsschicht (220), welche auf der ersten Beschichtungsschicht (210) gebildet ist; und eine Zwischenschicht (215), welche zwischen der ersten Beschichtungsschicht (210) und der zweiten Beschichtungsschicht (220) gebildet ist,

in der Zwischenschicht (215) das erste Metall eine Tendenz zur Konzentrationsänderung aufweist, in einer radialen Richtung des Lithiummetalloxidpartikels (200) abzunehmen, und das zweite Metall eine Tendenz zur Konzentrationsänderung aufweist, in der radialen Richtung des Lithiummetalloxidpartikels (200) zuzunehmen, in der ersten Beschichtungsschicht (210) das erste Metall eine Tendenz zur Konzentrationsänderung aufweist, in der radialen Richtung des Lithiummetalloxidpartikels (200) zuzunehmen,

die Tendenz zur Konzentrationsänderung durch Transmissionselektronenmikroskopie (TEM) und energiedispersive Röntgenspektroskopie (EDS) analysiert wird, und

das erste Metall Zr oder Ti ist und das zweite Metall Al ist.

5. Kathodenaktivmaterial für eine Lithium-Sekundärbatterie gemäß Anspruch 4, wobei die erste Beschichtungsschicht (210) eine oberfläche von 70 % oder mehr der Oberflächen der Lithiummetalloxidpartikel (200) bedeckt.

6. Kathodenaktivmaterial für eine Lithium-Sekundärbatterie gemäß Anspruch 4 oder Anspruch 5, wobei

in der zweiten Beschichtungsschicht (220) das zweite Metall eine Tendenz zur Konzentrationsänderung aufweist, in der radialen Richtung des Lithiummetalloxidpartikels (200) abzunehmen, und

die Tendenz zur Konzentrationsänderung durch Transmissionselektronenmikroskop (TEM) und energiedispersiver Röntgenspektroskopie (EDS) analysiert wird.

7. Kathodenaktivmaterial für eine Lithium-Sekundärbatterie gemäß irgend einem der Ansprüche 4 bis 6, wobei die zweite Beschichtungsschicht (220) umfasst:

eine untere Beschichtungsschicht, die auf der Zwischenschicht (215) gebildet ist; und eine obere Beschichtungsschicht, die auf der unteren Beschichtungsschicht gebildet ist,

wobei die obere Beschichtungsschicht das zweite Metall enthält, aber nicht das erste Metall enthält.

8. Kathodenaktivmaterial für eine Lithium-Sekundärbatterie gemäß irgend einem der Ansprüche 4 bis 7, wobei die Lithiummetalloxidpartikel (200) 80 Mol-% oder mehr Nickel, bezogen auf alle Elemente außer Lithium und Sauerstoff, enthalten.

9. Lithium-Sekundärbatterie, umfassend:
eine Kathode (100), die eine Kathodenaktivmaterialschicht (110) umfasst, die das Kathodenaktivmaterial für eine Lithium-Sekundärbatterie gemäß einem der Ansprüche 4 bis 8 umfasst; und eine Anode (130), die der Kathode gegenüberliegt.

## Revendications

1. Un procédé de fabrication d'un matériau actif de cathode pour une batterie secondaire au lithium, le procédé comprenant:

préparer de particules d'oxyde métallique de lithium (200) ;
placer les particules d'oxyde métallique de lithium (200), et une première source de revêtement contenant un premier métal dans un solvant de revêtement, de manière à revêtir primairement les particules d'oxyde métallique de lithium (200); et
placer séquentiellement une deuxième source de revêtement contenant un deuxième métal dans le solvant de revêtement dans un état où les particules d'oxyde métallique de lithium revêtues primairement (200) sont dispersées dans le solvant de revêtement en tant qu'un procédé in situ sans extraire séparément un produit intermédiaire, de manière à revêtir secondairement les particules d'oxyde métallique de lithium revêtues primairement (200) ;
dans lequel le premier métal est Zr ou Ti, et le deuxième métal est Al.

2. Le procédé selon la revendication 1, dans lequel les particules d'oxyde métallique de lithium (200) contiennent 80 % en moles ou plus de nickel sur la base de tous éléments à l'exception du lithium et de l'oxygène.

3. Le procédé selon la revendication 1 ou la revendication 2, dans lequel le solvant de revêtement est de l'eau désionisée.

4. Un matériau actif de cathode pour une batterie secondaire au lithium comprenant:

des particules d'oxyde métallique de lithium (200); et
une couche de revêtement qui est formée sur surfaces des particules d'oxyde métallique de lithium (200) et contient un premier métal et un deuxième métal,
dans lequel la couche de revêtement comprend:

une première couche de revêtement (210) formée sur surfaces des particules d'oxyde métallique de lithium (200); une deuxième couche de revêtement (220) formée sur la première couche de revêtement (210); et une couche intermédiaire (215) formée entre la première couche de revêtement (210) et la deuxième couche de revêtement (220),
dans la couche intermédiaire (215), le premier métal a une tendance de changement de concentration à être diminué dans une direction radiale de la particule d'oxyde métallique de lithium (200), et le deuxième métal a une tendance de changement de concentration à être augmenté dans la direction radiale de la particule d'oxyde métallique de lithium (200),
dans la première couche de revêtement (210), le premier métal a une tendance de changement de concentration à être augmenté dans la direction radiale de la particule d'oxyde métallique de lithium (200),
la tendance de changement de concentration est analysée par analyse microscopie électronique à transmission (TEM) et spectroscopie aux rayons X à dispersion d'énergie (EDS), et

le premier métal est Zr ou Ti, et le deuxième métal est Al.

5. Le matériau actif de cathode pour une batterie secondaire au lithium selon la revendication 4, la première couche de revêtement (210) couvre une superficie de 70 % ou plus des surfaces des particules d'oxyde métallique de lithium (200).

6. Le matériau actif de cathode pour une batterie secondaire au lithium selon la revendication 4 ou la revendication 5, dans lequel
dans la deuxième couche de revêtement (220), le deuxième métal a une tendance de changement de concentration à être diminué dans la direction radiale de la particule d'oxyde métallique de lithium (200), et

la tendance de changement de concentration est analysée par analyse microscopie électronique à transmission (TEM) et spectroscopie aux rayons X à dispersion d'énergie (EDS) .

7. Le matériau actif de cathode pour une batterie secondaire au lithium selon l'une quelconque des revendications 4 à 6, dans lequel la deuxième couche de revêtement (220) comprend:

une couche de revêtement inférieure formée sur la couche intermédiaire (215); et une couche de revêtement supérieure formée sur la couche de revêtement inférieure, dans lequel la couche de revêtement supérieure contient le deuxième métal mais ne contient pas le premier métal.

8. Le matériau actif de cathode pour une batterie secondaire au lithium selon l'une des revendications 4 à 7, dans lequel les particules d'oxyde métallique de lithium (200) contiennent 80 % en moles ou plus de nickel sur la base de tous éléments à l'exception de lithium et d'oxygène.

9. Une batterie secondaire au lithium, comprenant:
une cathode (100) comprenant une couche de matériau actif de cathode (110) qui comprend le matériau actif de cathode pour une batterie secondaire au lithium selon l'une des revendications 4 à 8; et une anode (130) faisant face à la cathode.

[FIG. 1]

| PREPARING LITHIUM METAL OXIDE PARTICLES | S10 |

$\downarrow$

| PUTTING LITHIUM METAL OXIDE PARTICLES AND COATING SOURCE CONTAINING FIRST METAL INTO COATING SOLVENT TO PERFORM PRIMARY WET COATING | S20 |

$\downarrow$

| PUTTING SECOND COATING SOURCE CONTAINING SECOND METAL INTO COATING SOLVENT TO PERFORM SECONDARY WET COATING | S30 |

[FIG. 2]

220
215
210
200

[FIG. 3]

[FIG. 4]

[FIG. 5]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020160126840
- CN 110620230 A

- KR 102207997 B1

**Non-patent literature cited in the description**

- **YONG-CHUN et al.** Synergy of doping and coating induced heterogeneous structure and concentration gradient in Ni-rich cathode for enhanced electrochemical performance. *Journal of power sources*, 31 May 2019, vol. 423, 144-151